# EUROPEAN PATENT SPECIFICATION

(11) **EP 4 183 686 B1**
(45) Date of publication and mention of the grant of the patent: **14.08.2024**
(21) Application number: 21209932.9
(22) Date of filing: 23.11.2021
(51) Int. Cl.: B64D 11/06, B60N 2/005, B60N 2/24, B60N 2/30, B60N 2/015, B60R 7/04

(54) **SUPPORT SYSTEM FOR GOODS AND PERSONS, AND A PASSENGER TRANSPORT VEHICLE HAVING THE SAME**
TRAGSYSTEM FÜR WAREN UND PERSONEN SOWIE EIN FAHRGASTTRANSPORTFAHRZEUG DAMIT
SYSTÈME DE SUPPORT POUR MARCHANDISES ET PERSONNES, ET VÉHICULE DE TRANSPORT DE PASSAGERS LE COMPRENANT

(43) Date of publication of application: 24.05.2023
(73) Proprietor: Airbus Operations GmbH, 21129 Hamburg (DE)
(72) Inventor: Meiranke, Dirk, 21129 Hamburg (DE); Poppe, Andreas, 21129 Hamburg (DE); Hermann, Benthien, 21129 Hamburg (DE); Grabow, Thomas, 21129 Hamburg (DE); Schliwa, Ralf, 21129 Hamburg (DE)
(74) Representative: Schornack, Oliver

(56) References cited:
- CN-U- 201 736 843
- JP-A- H10 315 866
- US-A1- 2012 298 678
- US-A1- 2019 263 294
- US-A1- 2020 376 986
- US-B1- 6 488 327
- US-B2- 9 010 863

## Description

The invention relates to a support system for goods and persons, and a passenger transport vehicle having the same. Particularly, the invention relates to a support system having at least two transport devices, each for a different type of good or person, arranged on a respective standardized base support unit, and further relates to a vehicle having such support system.

Vehicles for transporting passengers, such as aircrafts, buses, trains and ships, comprise a plurality of passenger seats provided as a plurality of seat rows behind one another along a longitudinal direction of the vehicle. Each of the passenger seats, at least in the same cabin class, is of the same type. These passenger seats are further optimized for the largest possible number of passengers per seat row and the largest possible number of passenger seat rows per vehicle.

More and more vehicle operators, such as airlines, bus services, train services and ferry lines request a greater flexibility with respect to the passenger seats. For instance, some vehicle operators want to rearrange the passenger seats within the passenger cabin, for example, in order to change the cabin class from economy to premium economy having a greater leg space between seat rows.

Document JPH10315866 discloses an indoor structure for a motor vehicle, having hollow body fixed to floor of motor vehicle through detaching mechanism, in lieu of the seat. The structure includes a seat fixed to a floor of a motor vehicle, through detaching mechanisms. The detaching mechanism allows removing of the seat and replacing the seat with a hollow body.

It is therefore an object of the invention to provide a system and passenger transport vehicle that allow for greater flexibility for the vehicle operator.

This object is solved by a support system with the features of claim 1, and a passenger transport vehicle with the features of claim 8.

Preferred embodiments are defined by the dependent claims.

According to the invention, a support system for a passenger transport vehicle comprises a plurality of base support units configured to be mounted to a floor of the vehicle, wherein the plurality of base support units form a grid of base support units along a cross-sectional direction and a longitudinal direction of the passenger transport vehicle. Such mounting to the floor of the vehicle may be achieved by providing seat rails or other mounting rails in the floor of the vehicle, to which each base support unit can be mounted. An arrangement of such rails along a longitudinal axis of the vehicle allows installation of the base support units at any desired location along the longitudinal axis of the vehicle. Instead of rails, distinct mounting fixtures can be provided in the floor of the vehicle, to which a base support unit can be mounted.

The support system further comprises a first transport device configured to hold a first type of good or person, the first transport device comprising a standardized mounting unit mounted to one of the plurality of base support units, and a second transport device configured to hold a second type of good or person, the second transport device comprising a standardized mounting unit mounted to another one of the plurality of base support units. Thus, the first and second transport devices are configured to hold a respective first or second type of good or person, while the first and second transport devices can be mounted to any of the base support units due to the corresponding standardized mounting unit. The standardization of the standardized mounting unit is to be understood as each mounting unit of any of the first and second transport devices has the same form, shape and/or type of mounting. It is further to be understood that the plurality of base support units also have the same form, shape and/or type of mounting corresponding to the standardized mounting units. Thus, any standardized mounting unit can be mounted to any base support unit.

According to the invention, the support system further comprises a third transport device configured to hold a third type of good or person, the third transport device comprising a plurality of standardized mounting units, each of which is mounted to a respective base support unit of a group of adjacent base support units in the grid of base support units. The third transport device, hence, is sized larger than one base support unit. In other words, the search transport device spans over one or more base support units and is mounted to each of the one or more base support units with a respective standardized mounting unit. Such third transport device allows larger goods, items or persons to be transported in the vehicle. Depending on the size of the third transport device, the weight of the good, item or person is distributed over the one or more base support units.

In any case, any of the first to third transport devices can be installed in the vehicle. For example, different types of transport devices can be arranged adjacent to one another in a longitudinal direction and/or a cross-sectional direction of the vehicle. Thus, the vehicle and, particularly, its passenger cabin can be modified in a very flexible manner by mounting, changing, replacing, interchanging, etc. different types of transport devices at any location with in the passenger cabin, while the base support units can be maintained, i.e. can be kept mounted to the floor of the vehicle, for any of the transport device configurations.

In another implementation variant, each of the plurality of base support units can comprise a standardized holding fixture. Such standardized holding fixture is configured to receive a standardized mounting unit of any of the transport devices. For example, each standardized mounting unit of the first and second transport device as well as the third transport device is configured to be placed on and securely fixed to the standardized holding fixture. The standardized holding fixture and standardized mounting unit, hence, have corresponding portions that allow mounting to one another irrespective of the base support unit and irrespective of the transport device.

In yet another implementation variant, a base support unit can be dimensioned and configured to securely hold one transport device (or a portion thereof in case of the third transport device). The base support unit can have sufficient mounting points to the floor of the vehicle, in order to transfer any loads (static and dynamic loads) from the transport device into the floor in a secure manner. Specifically, depending on the type of vehicle, certain static parameters have to be fulfilled by the base support unit. It is to be understood that a base support unit is designed to withstand the forces induced by the transport device and for any regulated case for the respective type of vehicle.

In a further implementation variant, each standardized mounting unit can be placed vertically or horizontally on the standardized holding fixture. For instance, the standardized mounting unit can be moved in a vertical direction to be placed on the standardized holding fixture or can be moved in a horizontal direction to be placed on or at the standardized holding fixture. Thereafter, the standardized mounting unit can be secured (mechanically fixed) to the standardized holding fixture or vice versa.

In an exemplary implementation variant, each standardized holding fixture can comprise at least one tubular portion configured to receive a standardized mounting unit. For example, the standardized holding fixture can be made from or can comprise a tube. Such tube (tubular portion) can have a circular, elliptical, rectangular, polygonal, etc. cross-sectional shape.

Furthermore, each standardized mounting unit can have a portion corresponding to the at least one tubular portion of the standardized holding fixture. For instance, the standardized mounting unit can have a cross-sectional shape that corresponds to a part of the circular, elliptical, rectangular, polygonal, etc. cross-sectional shape of the tubular standardized holding fixture. As an example only, the standardized mounting unit can have a U-shaped, C-shaped or L-shaped cross-section that can be put over the tubular portion of the standardized holding fixture. In case of a round holding fixture, i.e. a holding fixture having a portion with a curvature, a standardized mounting unit with a U-shaped or C-shaped cross-section can be employed, where the round portion of the U-shaped or C-shaped cross-section has an inner diameter or curvature corresponding to an outer diameter or curvature of the tubular portion of the standardized holding fixture.

In another exemplary implementation variant, the above described forms and shapes of the standardized mounting unit and standardized holding fixture can be interchanged. For instance, the standardized mounting unit can comprise at least one tubular portion, and the standardized holding fixture can have a U-shaped, C-shaped or L-shaped cross-section configured to receive the at least one tubular portion of the standardized mounting unit.

In a further implementation variant, each of the plurality of base support units can comprise a table-like substructure. For example, the table-like substructure can comprise a substantially flat (horizontal) upper surface that allows laying an item on the upper surface. The standardized holding fixture can be arranged next to the table-like substructure, can be arranged in a corresponding recess in the table-like substructure, or can be integrated into the table-like substructure. Thus, the base support unit can be used as a table, if no transport device is mounted thereto. The table can be used by a person sitting in a passenger seat installed next to the base support unit.

In yet a further implementation variant, each of the first and second transport devices can comprise a recess configured to be placed on the table-like substructure of one of the plurality of base support units. For instance, the recess may have an inner surface that can be placed on the upper surface of the table-like substructure. This allows a better distributed load transfer from the transport device into the base support unit. The standardized mounting unit of the respective transport device can be arranged next to or in the recess, depending on the arrangement of the standardized holding fixture with respect to the table-like substructure.

In another implementation variant, the first and second transport device as well as the third transport device can be a passenger seat, a special seat for disabled people, a child seat, a baby seat, an extra wide seat, a pet box, a luggage box, a table, a bed, a medevac bed, a cargo box, a wide cargo box, or a cargo mounting rail configured to hold at least one cargo container. Thus, any of the transport devices can have a particular transport function for a particular type of good or person. A good can be any of a pet, a parcel, a piece of luggage, a piece of cargo, etc..

A person can be a passenger, a passenger having specific needs, such as a disabled or injured person or a person requiring more space to sit on. For instance, a disabled person may be able to sit on a specialized passenger seat. Since this specialized passenger seat can easily be removed from the base support unit, the disabled person can enter the vehicle already sitting on the specialized passenger seat, which makes it more comfortable for the person and also makes it easier for the vehicle personnel to help the disabled person entering and leaving the vehicle. On the other hand, the specialized passenger seat may further include special features, such as removable or deployable armrests, special seat belt(s), and/or a rotatable seating element facilitating placing the person on the seating element and rotating the seating element or the entire specialized passenger seat (e.g., from an aisle of the vehicle into the travel direction of the seat.

A person can further be a child requiring a smaller passenger seat or a baby requiring a baby carrier to lie in. For instance, a baby carrier may be mounted to a base support unit in a manner that the baby faces backwards, i.e. against the moving direction of the vehicle. The latter, particularly, allows transportation of babies in a better position allowing a face to face with a neighbouring passenger and reducing injuries during crash situations as well as hard braking of the vehicle.

It is to be understood, that any of the transport devices can form a combination of the above-outlined types of transport device. As an example only, a bed or child seat can be combined with a luggage box, a pet box or cargo box can be combined with a table, etc.

According to a second exemplary aspect to better understand the present disclosure, a passenger transport vehicle comprises a passenger cabin, and a support system according to the first aspect or one of its implementation variants, wherein the support system is arranged in the passenger cabin. For instance, the vehicle can be an aircraft, a train, a bus, a ship or the like specialized for transporting passengers.

According to the invention, the plurality of base support units are be arranged along a cross-sectional direction of the passenger transport vehicle and along a longitudinal direction of the passenger transport vehicle. Thus, the base support units can fill a certain space of the passenger cabin, according to a grid in longitudinal and cross-sectional direction.

Moreover, the first and second transport devices can be mounted to an associated base support unit adjacent to one another along the cross-sectional direction and/or the longitudinal direction of the passenger transport vehicle. Thus, the passenger cabin can be equipped with at least two different transport devices for respective different goods or persons. This provides for a high flexibility with respect to design, layout and configuration of the passenger cabin. It further allows a quick modification and change of the design, layout and configuration of the passenger cabin.

As an example only, the transport vehicle may be modified, in order to transport an injured person, by removing a certain number of (regular) passenger seats and mounting a medevac bed on the freed base support units. Likewise, in case less passengers are expected in the vehicle on a certain trip, larger seats and/or beds can be installed, which can be sold by the vehicle operator for a higher price due to the higher comfort. On the other hand, cargo storage space can be implemented in the passenger cabin by mounting corresponding cargo-related transport devices instead of (regular) passenger seats.

The present disclosure is not restricted to the aspects and variants in the described form and order. Specifically, the description of aspects and variants is not to be understood as a specific limiting grouping of features. It is to be understood that the present disclosure also covers combinations of the aspects and variants not explicitly described. Thus, each variant or optional feature can be combined with any other aspect, variant, optional feature or even combinations thereof, insofar it falls within the scope of the claims.

Preferred embodiments of the invention are now explained in greater detail with reference to the enclosed schematic drawings, in which
- Figure 1: schematically illustrates a cross-sectional view of a base support unit of a support system;
- Figure 2: schematically illustrates a cross-sectional view of an exemplary transport device;
- Figure 3: schematically illustrates a cross-sectional view of another exemplary transport device;
- Figure 4: schematically illustrates exemplary mounting units and holding fixtures;
- Figures 5 to 7: schematically illustrate cross-sectional views of exemplary support systems and configurations of transport devices; and
- Figure 8: schematically illustrates a vehicle and passenger cabin with a support system having an exemplary configuration of transport devices.

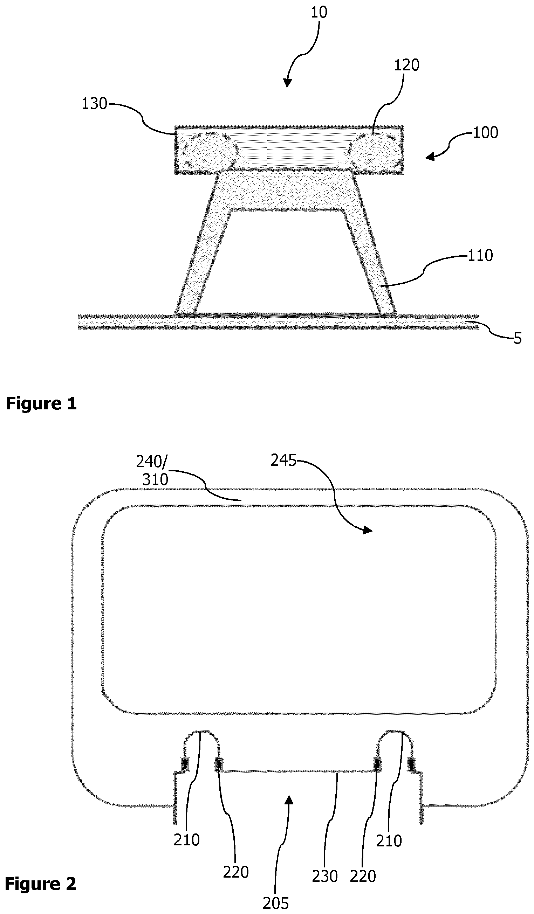

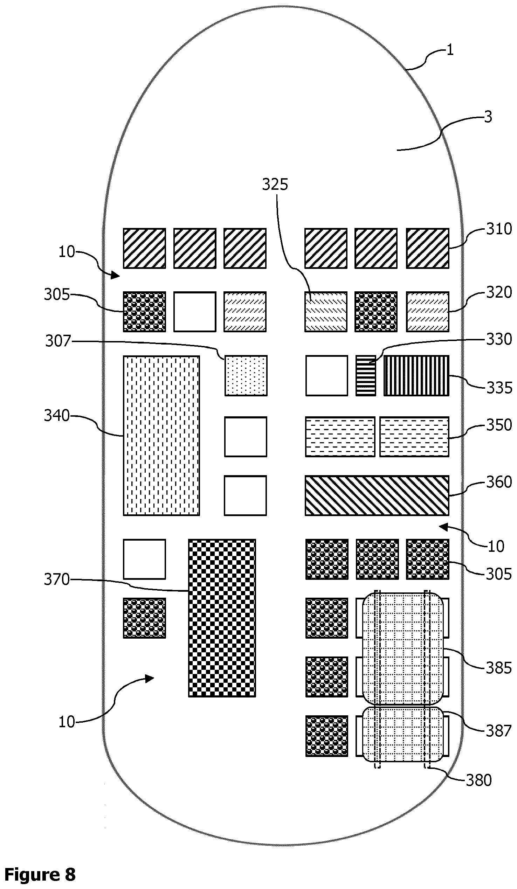

Figure 1 schematically illustrates a cross-sectional view of a base support unit 100 of a support system 10. The base support unit 100 can comprise a leg section 110, for example, including one or more legs. The leg section 110 is mounted to a floor 5 of a vehicle 1 (Figure 8). Thus, any loads and forces from the base support unit 100 can be transferred into the floor 5. The base support unit 100 further comprises a standardized holding fixture 120, which is illustrated in dashed lines in Figure 1. For example, the standardized holding fixture 120 can be formed of or can comprise at least one tubular portion, such as two tubular portions as illustrated in Figure 1.

Optionally, the base support unit 100 can comprise a table-like substructure 130. The substructure 130 is arranged on the leg section 110 and can function as a table. In addition, the standardized holding fixture 120 can be arranged next to the substructure 130 or can be integrated into the substructure 130. For example, a plan view of the base support unit 100 could have a table-like substructure 130 at a centre of the base support unit 100, while one or more standardized holding fixtures 120 are arranged at one or more sides of the table-like substructure 130 (e.g., the holding fixtures 120 extends from the table-like substructure 130).

On the other hand, one or more standardized holding fixtures 120 can be mounted on top of the leg section 110 and the table-like substructure 130 surrounds the standardized holding fixture(s) 120. The holding fixture(s) 120 can be arranged in recesses of the substructure 130, so that the holding fixture(s) 120 are accessible from a top surface of the substructure 130.

Figure 2 schematically illustrates a cross-sectional view of an exemplary transport device 240. The transport device 240 is configured to hold a first type of good or person. The illustrated exemplary transport device 240 can be a pet box, luggage box or cargo box. In any case, the transport device 240 comprises a standardized mounting unit 205, particularly in a bottom region of the transport device 240.

The standardized mounting unit 205 is configured to be mounted to any base support unit 100, such as the one illustrated in Figure 1. To do so, the standardized mounting unit 205 is configured to be placed on and be securely fixed to the standardized holding fixture 120. For example, the holding fixture 120 is configured to receive the standardized mounting unit 205, and the standardized mounting unit 205 has a portion 210 corresponding to the standardized holding fixture 120.

The illustrated exemplary standardized mounting unit 205 has a U-shaped portion 210 (arranged upside down), so that the mounting unit 205 can be placed vertically on the standardized holding fixture 120. The holding fixture 120 can have a tubular portion with an outer curvature (radius) that corresponds to an inner curvature (radius) of the U-shaped portion 210 of the mounting unit 205.

The standardized mounting unit 205 can further have a locking device 220, in order to securely fix the mounting unit 205 to the standardized holding fixture 120. Such locking device 220 may achieve a form fit and/or force fit connection to the standardized holding fixture 120. As an example only, the locking device 220 may be or comprise a (threaded) bolt, fastener, ring, nut, clip, latch or the like that can be fixed around and/or through the holding fixture 120. The locking device 220 mechanically secures (fixes) the standardized mounting unit 205 and, hence, the transport device 240 to the base support unit 100.

The transport device 240 can further comprise a recess 230 configured to be placed on the table-like substructure 130 of the base support unit 100. Such recess 230 provides at least one surface contacting a corresponding surface of the substructure 130. This allows a good distribution of forces transferred from the transport device 240 into the base support unit 100. In addition, such recess 230 can achieve an additional form fit connection between the transport device 240 and the base support unit 100.

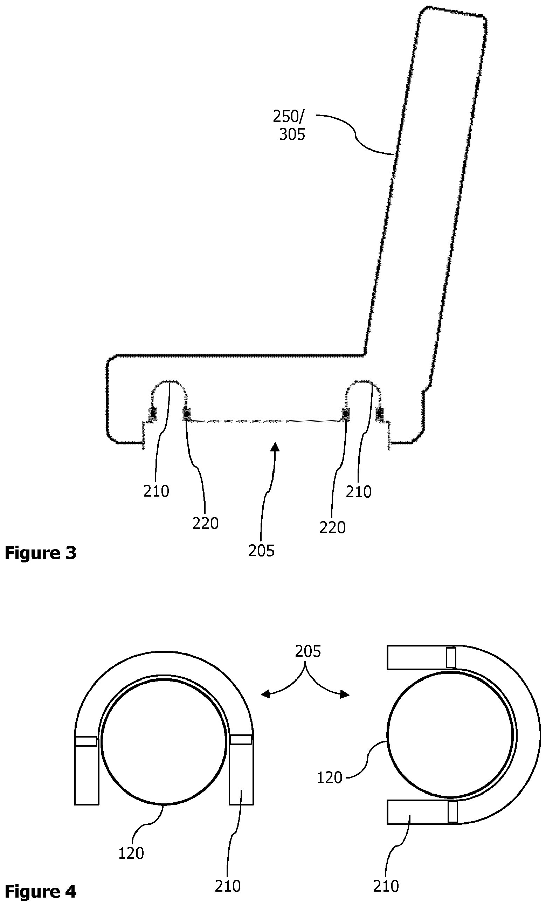

Figure 3 schematically illustrates a cross-sectional view of another exemplary transport device 250. The transport device 250 is configured to hold a second type of good or person. The illustrated transport device 250 can be a passenger seat. The passenger seat 250 can be a regular passenger seat, having a seat cushion and back rest (optionally adjustable with respect to the seat cushion). Alternatively, the passenger seats 250 can be a child seat or special seat for people having a particular need (disabled and/or injured people or people requiring more space).

The transport device 250 illustrated in Figure 3 comprises a standardized mounting unit 205, which is identical or at least very similar to the standardized mounting unit 205 of transport device 240 illustrated in Figure 2. Specifically, the standardized mounting unit 205 of transport device 250 can be mounted to any base support unit 100 due to its standardized form, size, connecting structure, etc.. For example, the standardized mounting unit 205 can comprise a portion 210 corresponding to a tubular portion of the standardized holding fixture 120 and/or can further comprise a recess 230 configured to be placed on a table-like substructure 130 of the base support unit 100. Of course, the transport device 250 can also have a locking device 220, to securely mount the transport device 250 to the base support unit 100.

Figure 4 schematically illustrates exemplary mounting units 205 and holding fixtures 120. While both holding fixtures 120 are the same, i.e. a tubular portion 120, the left mounting unit 205 can be placed vertically on the standardized holding fixture 120, and the right mounting unit 205 in Figure 4 can be placed horizontally on the standardized holding fixture 120. While the left mounting unit 205 may be easier installed on the basis support unit 100, the right mounting unit 205 may have improved force transfer capabilities, particularly in case of a crash situation or hard breaking situation of the vehicle 1, if the open part of the portion 210 of the mounting unit 205 faces in the driving direction of the vehicle. In other words, the transport device 240, 250 as illustrated in Figure 2 or 3 and having a mounting unit 205 as illustrated to the right in Figure 4 will act towards the left in Figures 2 to 4 during a breaking situation of the vehicle 1, so that the inertial force of the transport device 240, 250 is transferred via the closed part of the portion 210 of the mounting unit 205.

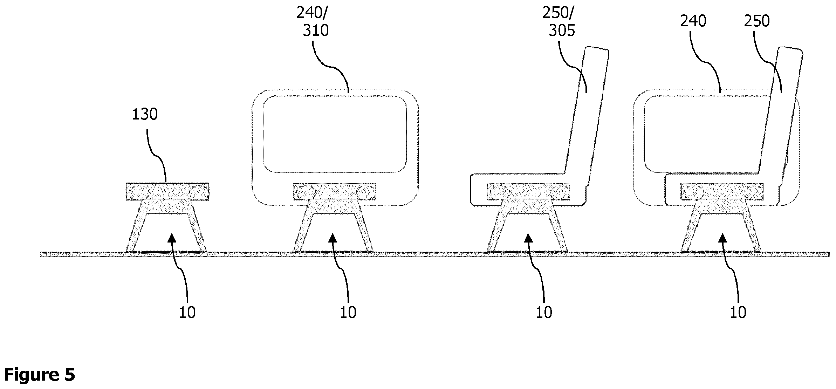

Figure 5 schematically illustrates a cross-sectional view of a support system 10 having different configurations of transport devices 240, 250. Specifically, from left to right in Figure 5 the support system is provided with a base support unit 100 alone (e.g., used as a table), a base support unit 100 equipped with a first transport device 240 configured to hold the first type of good or person (as the one illustrated in Figure 2), a base support unit 100 equipped with a second transport device 250 configured to hold a second type of good or person (as the one illustrated in Figure 3), and at least two base support units 100 (arranged behind one another in the viewing direction of Figure 5), one base support unit 100 being equipped with a second transport device 250 configured as a passenger seat and one base support unit 100 being equipped with a first transport device 240 configured as a pet box, luggage box or cargo box 240.

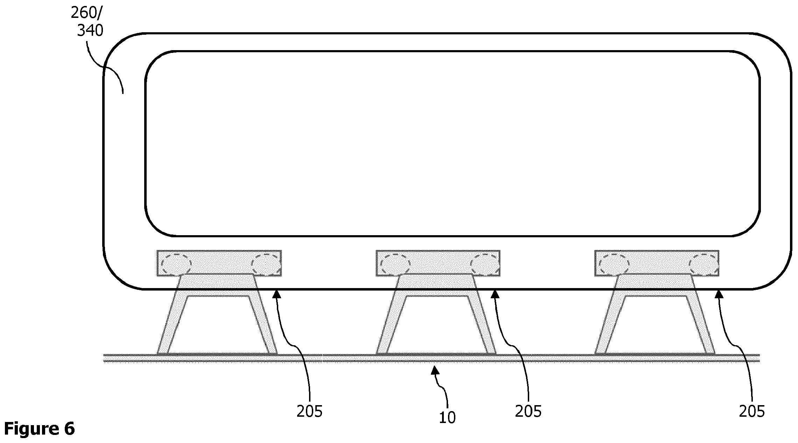

Figure 6 schematically illustrates a cross-sectional view of a support system 10 having a further configuration. Specifically, this support system 10 has three base support units 100 arranged along a longitudinal direction of the vehicle 1 (i.e., a moving direction of the vehicle 1). A third transport device 260 configured to hold a third type of good or person is mounted on each of the three base support units 100. Particularly, the transport device 260 comprises a plurality of standardized mounting units 205, each of which is mounted to one of the plurality of base support units 100. It is to be understood that each of the standardized mounting units 205 corresponds to the mounting units 205 explained with respect to Figures 2 to 4. Thus, the third transport device 260 can replace up to three transport devices 240, 250. As an example only, the third transport device 260 can be a bed, a medevac bed, or a (long) cargo box.

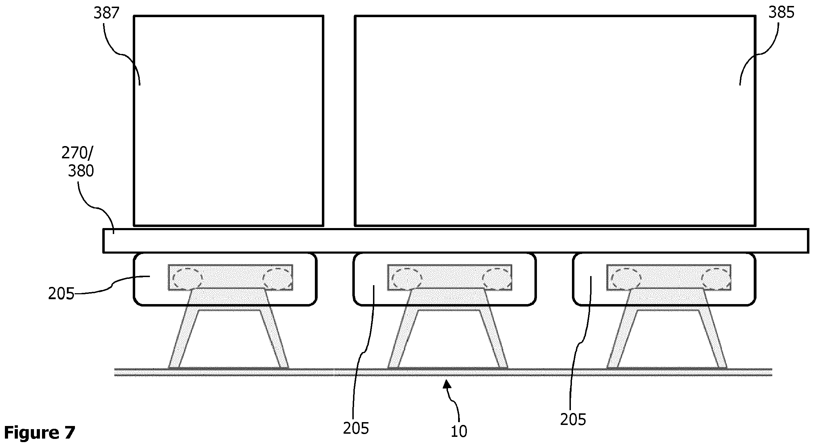

Figure 7 schematically illustrates a cross-sectional view of another exemplary support system 10 having a further configuration. Specifically, this support system 10 has three base support units 100 arranged along a longitudinal direction of the vehicle 1. Mounted to these base support units 100 is a cargo mounting rail 270 via three standardized mounting units 205. Specifically, the standardized mounting units 205 are connected to or integrated into the cargo mounting rail 270, so that the cargo mounting rail 270 spans over the three base support units 100, preferably along the longitudinal direction of the vehicle 1. It is to be understood that the cargo mounting rail 270 may have any desired number of standardized mounting units 205 (e.g., one or more standardized mounting units 205), in order to be mounted to a corresponding number of base support units 100 and spanning over the corresponding number of base support units 100.

The cargo mounting rail 270 may be configured as a usual cargo mounting rail, so that any type of cargo box, cargo pallet, cargo container, such as a small cargo container 387 or large cargo container 385 can be moved over and along the cargo mounting rail 270 and can be attached to the cargo mounting rail 270 in a standardized fashion. Thus, the vehicle 1 can easily be configured to receive standardized cargo transport devices 385, 387.

Figure 8 schematically illustrates a vehicle 1 and passenger cabin 3 with a support system 10 having an exemplary configuration of transport devices 305 to 387. Specifically, as can be derived from Figure 8, a grid of base support units 100 can be mounted to a floor 5 of the vehicle 1. It is to be noted that the base support units 100 not equipped with any transport device 305 to 387 are drawn as rectangles without any pattern in Figure 8. Such base support units 100 can be used, for example, as a table. Due to the standardized holding fixtures 120 of each base support unit 100 and the standardized mounting units 205 of any transport device 305 to 387 of the disclosed support system 10, the passenger cabin 3 can be flexibly configured and reconfigured in a fast manner.

As an example only, Figure 8 illustrates different types of transport devices 305 to 387 as rectangles having a respective specific pattern. For instance, a regular passenger seat 305, such as the passenger type transport device 250 (Figure 3), can be mounted to corresponding base support units 100. The first row in the passenger cabin 3, however, is equipped with a pet box 240/310 (Figure 2) or cargo box or the like. Next to a regular passenger seat 305 can be arranged a child seat 320, that can be smaller and specifically configured for a smaller passenger, particularly a child. Likewise, a baby seat or carrier 325 can be arranged next to a regular passenger seat 305, so that an adult can take care of a baby sitting in his/her own seat. Instead of a specifically designed baby seat 325, the corresponding transport device 240 can have a form similar as the one illustrated in Figure 2 with mounting elements (not illustrated) on its upper surface, to which a baby carrier can be attached (such as an "Isofix"^{™} mount).

Again with reference to Figure 8, a luggage box and/or table 330 can be sized smaller (in a widthwise direction, i.e. cross-sectional direction of the vehicle 1) than a base support unit 100. This option allows installation of a larger cargo box 335 or a wider passenger seat 350 or an extra large cargo box 360 in a widthwise direction of the vehicle 1. The larger cargo box 335 or wider passenger seat 350 can be configured to be mounted on one or more base support units 100 in the widthwise direction of the vehicle 1.

Correspondingly, certain transport devices, such as a bed 260/340 (Figure 6) or a medevac bed 370, can be mounted on a plurality of base support units 100 in a longitudinal direction of the vehicle 1. It is to be understood that instead of a bed 260/340, a cargo box (not specifically illustrated in Figure 8) may also be mounted to a plurality of base support units 100 in the longitudinal direction of the vehicle 1. On the other hand, cargo mounting rails 270/380 (Figure 7) can be mounted to one or more base support units 100 (in the longitudinal as well as cross-sectional direction of the vehicle 1), which allows storage and mounting of a small cargo pallet 387 and/or a large cargo container 385 within the passenger cabin 3.

The above description of the drawings is to be understood as providing only exemplary embodiments of the present invention and shall not limit the invention to these particular embodiments, the invention being defined by the appended claims.

## Claims

1. A support system (10) for a passenger transport vehicle (1), the system (10) comprising:
a plurality of base support units (100) configured to be mounted to a floor (5) of the vehicle (1), wherein the plurality of base support units (100) form a grid of base support units (100) along a cross-sectional direction and a longitudinal direction of the passenger transport vehicle (1);
a first transport device (240-270) configured to hold a first type of good or person, the first transport device (240-270) comprising a standardized mounting unit (205) mounted to one of the plurality of base support units (100);
a second transport device (240-270) configured to hold a second type of good or person, the second transport device (240-270) comprising a standardized mounting unit (205) mounted to another one of the plurality of base support units (100); and
a third transport device (240-270) configured to hold a third type of good or person, the third transport device (240-270) comprising a plurality of standardized mounting units (205), each of which is mounted to a respective base support unit (100) of a group of adjacent base support units (100) in the grid of base support units (100).

2. The support system (10) according to claim 1, wherein each of the plurality of base support units (100) comprises a standardized holding fixture (120), and
wherein each standardized mounting unit (205) is configured to be placed on and securely fixed to the standardized holding fixture (120).

3. The support system (10) according to claim 2, wherein each standardized mounting unit (205) can be placed vertically or horizontally on the standardized holding fixture (120).

4. The support system (10) according to claim 2 or 3, wherein each standardized holding fixture (120) comprises at least one tubular portion configured to receive a standardized mounting unit (205), and each standardized mounting unit (205) has a portion corresponding to the at least one tubular portion of the standardized holding fixture (120).

5. The support system (10) according to one of claims 1 to 4, wherein each of the plurality of base support units (100) comprises a table-like substructure (130).

6. The support system (10) according to claim 5, wherein each of the transport devices (240-270) comprises a recess (230) configured to be placed on the table-like substructure (130) of one of the plurality of base support units (100).

7. The support system (10) according to one of claims 1 to 6, wherein the transport device (240-270) is a passenger seat (250, 305), a special seat (307) for disabled people, a child seat (320), a baby seat (325), an extra wide seat (350), a pet box (240, 310), a luggage box and/or table (330), a cargo box (335), a bed (260, 340), a wide cargo box (360), a medevac bed (370), or a cargo mounting rail (270, 380) configured to hold at least one cargo pallet (387) or cargo container (385).

8. A passenger transport vehicle (1), comprising:
a passenger cabin (3); and
a support system (10) according to one of claims 1 to 7 arranged in the passenger cabin (3).

9. The passenger transport vehicle (1) according to claim 8, wherein the grid of base support units (100) is arranged along a cross-sectional direction of the passenger transport vehicle (1) and along a longitudinal direction of the passenger transport vehicle (1), and
wherein the transport devices (240-270) are mounted to an associated base support unit (100) adjacent to one another along the cross-sectional direction and/or the longitudinal direction of the passenger transport vehicle (1).

## Patentansprüche

1. Tragsystem (10) für ein Passagiertransportfahrzeug (1), wobei das System (10) Folgendes umfasst:
mehrere Basistrageinheiten (100), die dazu ausgelegt sind, am Boden (5) des Fahrzeugs (1) montiert zu sein, wobei die mehreren Basistrageinheiten (100) ein Gitter aus Basistrageinheiten (100) entlang einer Querschnittsrichtung und einer Längsrichtung des Passagiertransportfahrzeugs (1) ausbilden;
eine erste Transportvorrichtung (240-270), die dazu ausgelegt ist, einen ersten Typ Waren oder Personen zu halten, wobei die erste Transportvorrichtung (240-270) eine standardisierte Montageeinheit (205) umfasst, die an einer der mehreren Basistrageinheiten (100) montiert ist;
eine zweite Transportvorrichtung (240-270), die dazu ausgelegt ist, einen zweiten Typ Waren oder Personen zu halten, wobei die zweite Transportvorrichtung (240-270) eine standardisierte Montageeinheit (205) umfasst, die an einer anderen der mehreren Basistrageinheiten (100) montiert ist; und
eine dritte Transportvorrichtung (240-270), die dazu ausgelegt ist, einen dritten Typ Waren oder Personen zu halten, wobei die dritte Transportvorrichtung (240-270) mehrere standardisierte Montageeinheiten (205) umfasst, von denen jede an einer jeweiligen Basistrageinheit (100) einer Gruppe angrenzender Basistrageinheiten (100) im Gitter der Basistrageinheiten (100) montiert ist.

2. Tragsystem (10) nach Anspruch 1, wobei jede der mehreren Basistrageinheiten (100) eine standardisierte Halteeinrichtung (120) umfasst und
wobei jede standardisierte Montageeinheit (205) dazu ausgelegt ist, auf der standardisierten Halteeinrichtung (120) platziert und fest daran befestigt zu werden.

3. Tragsystem (10) nach Anspruch 2, wobei jede standardisierte Montageeinheit (205) vertikal oder horizontal auf der standardisierten Halteeinrichtung (120) platzierbar ist.

4. Tragsystem (10) nach Anspruch 2 oder 3, wobei jede standardisierte Halteeinrichtung (120) mindestens einen rohrförmigen Abschnitt umfasst, der dazu ausgelegt ist, eine standardisierte Montageeinheit (205) aufzunehmen, und jede standardisierte Montageeinheit (205) einen Abschnitt aufweist, der dem mindestens einen rohrförmigen Abschnitt der standardisierten Halteeinrichtung (120) entspricht.

5. Tragsystem (10) nach einem der Ansprüche 1 bis 4, wobei jede der mehreren Basistrageinheiten (100) eine tischartige Unterstruktur (130) umfasst.

6. Tragsystem (10) nach Anspruch 5, wobei jede der Transportvorrichtungen (240-270) eine Aussparung (230) umfasst, die dazu ausgelegt ist, auf der tischartigen Unterstruktur (130) einer der mehreren Basistrageinheiten (100) platziert zu sein.

7. Tragsystem (10) nach einem der Ansprüche 1 bis 6, wobei die Transportvorrichtung (240-270) ein Passagiersitz (250, 305), ein Spezialsitz (307) für Menschen mit Behinderung, ein Kindersitz (320), ein Babysitz (325) ein extrabreiter Sitz (350), eine Haustierbox (240, 310), eine Gepäckbox und/oder ein Gepäcktisch (330), eine Frachtkiste (335), ein Bett (260, 340), eine breite Frachtkiste (360), eine Krankentransportliege (370) oder eine Frachtmontageschiene (270, 380), die dazu ausgelegt ist, mindestens eine Frachtpalette (387) oder einen Frachtbehälter (385) zu halten, ist.

8. Passagiertransportfahrzeug (1), Folgendes umfassend:
eine Passagierkabine (3) und
ein Tragsystem (10) nach einem der Ansprüche 1 bis 7, das in der Passagierkabine (3) angeordnet ist.

9. Passagiertransportfahrzeug (1) nach Anspruch 8, wobei das Gitter der Basistrageinheiten (100) entlang einer Querschnittsrichtung des Passagiertransportfahrzeugs (1) und entlang einer Längsrichtung des Passagiertransportfahrzeugs (1) angeordnet ist und
wobei die Transportvorrichtungen (240-270) an einer zugehörigen Basistrageinheit (100) montiert sind, die entlang der Querschnittsrichtung und/oder der Längsrichtung des Passagiertransportfahrzeugs (1) aneinander angrenzen.

## Revendications

1. Système de support (10) destiné à un véhicule de transport de passagers (1), le système (10) comprenant:
une pluralité d'unités de support de base (100) conçues pour être montées sur un plancher (5) du véhicule (1), la pluralité d'unités de support de base (100) formant une grille d'unités de support de base (100) le long d'une direction transversale et d'une direction longitudinale du véhicule de transport de passagers (1);
un premier dispositif de transport (240-270) conçu pour contenir un premier type de bien ou de personne, le premier dispositif de transport (240-270) comprenant une unité de montage normalisée (205) montée sur l'une de la pluralité d'unités de support de base (100);
un deuxième dispositif de transport (240-270) conçu pour contenir un deuxième type de bien ou de personne, le deuxième dispositif de transport (240-270) comprenant une unité de montage normalisée (205) montée sur une autre de la pluralité d'unités de support de base (100); et
un troisième dispositif de transport (240-270) conçu pour contenir un troisième type de bien ou de personne, le troisième dispositif de transport (240-270) comprenant une pluralité d'unités de montage normalisées (205), chacune étant montée sur une unité de support de base (100) respective d'un groupe d'unités de support de base (100) adjacentes dans la grille d'unités de support de base (100).

2. Système de support (10) selon la revendication 1, chacune des unités de support de base (100) comprenant un dispositif de maintien normalisé (120), et
chaque unité de montage normalisée (205) étant conçue pour être placée sur le dispositif de maintien normalisé (120) et y être solidement fixée.

3. Système de support (10) selon la revendication 2, chaque unité de montage normalisée (205) pouvant être placée verticalement ou horizontalement sur le dispositif de maintien normalisé (120).

4. Système de support (10) selon la revendication 2 ou 3, chaque support normalisé (120) comprenant au moins une partie tubulaire conçue pour recevoir une unité de montage normalisée (205), et chaque unité de montage normalisée (205) ayant une partie correspondant à l'au moins une partie tubulaire du dispositif de maintien normalisé (120).

5. Système de support (10) selon l'une des revendications 1 à 4, chacune de la pluralité d'unités de support de base (100) comprenant une sous-structure de type table (130).

6. Système de support (10) selon la revendication 5, chacun des dispositifs de transport (240-270) comprenant un retrait (230) conçu pour être placé sur la sous-structure de type table (130) de l'une de la pluralité d'unités de support de base (100).

7. Système de support (10) selon l'une des revendications 1 à 6, le dispositif de transport (240-270) étant un siège passager (250, 305), un siège spécial (307) pour personnes handicapées, un siège enfant (320), un siège bébé (325), un siège extra-large (350), une caisse pour animaux (240, 310), un coffre à bagages et/ou une table (330), un coffre de fret (335), un lit (260, 340), une caisse de fret large (360), un lit d'évacuation sanitaire (370), ou un rail de montage de fret (270, 380) conçu pour contenir au moins une palette de fret (387) ou un contenant de fret (385).

8. Véhicule de transport de passagers (1), comprenant:
une cabine pour passagers (3); et
un système de support (10) selon l'une des revendications 1 à 7, disposé dans la cabine pour passagers (3).

9. Véhicule de transport de passagers (1) selon la revendication 8, la grille d'unités de support de base (100) étant disposée le long d'une direction transversale du véhicule de transport de passagers (1) et le long d'une direction longitudinale du véhicule de transport de passagers (1), et
les dispositifs de transport (240-270) étant montés sur une unité de support de base (100) associée, adjacentes l'une à l'autre le long de la direction transversale et/ou de la direction longitudinale du véhicule de transport de passagers (1).
